# EUROPÄISCHE PATENTSCHRIFT

(11) **EP 1 671 741 B1**
(45) Veröffentlichungstag und Bekanntmachung des Hinweises auf die Patenterteilung: **30.12.2009**
(21) Anmeldenummer: 05023727.0
(22) Anmeldetag: 29.10.2005
(51) Int. Cl.: B23K 37/04

(54) **Spannvorrichtung**
Tool clamping device.
Dispositif de serrage.

(30) Priorität: 15.12.2004 DE 202004019369 U
(43) Veröffentlichungstag der Anmeldung: 21.06.2006
(73) Patentinhaber: Staudinger, Karl, 86316 Friedberg (DE)
(72) Erfinder: Staudinger, Karl, 86316 Friedberg (DE)
(74) Vertreter: Schwarz, Thomas

(56) Entgegenhaltungen:
- EP-A- 1 306 168
- DE-A- 19 604 976
- FR-A- 2 757 437
- GB-A- 2 222 106

## Beschreibung

Die Erfindung betrifft eine Spannvorrichtung nach dem Oberbegriff des Anspruchs 1.

Eine derartige Spannvorrichtung ist aus der GB 2 222 106 A bekannt. Diese enthält ein Gehäuse und zwei Spannbacken, die relativ zum Gehäuse zwischen einer Einlegestellung und einer Spannstellung verschiebbar sind, wobei die Spannbacken an zueinander parallelen, innerhalb des Gehäuses verschiebbar geführten Führungsbolzen angeordnet sind, die durch einen gemeinsamen Antrieb über ein innerhalb des Gehäuse angeordnetes Koppelgetriebe verschiebbar sind. Bei herkömmlichen Spannvorrichtungen dieser Art ergibt sich jedoch vielfach die Problematik, dass diese relativ groß sind und damit den Zugang zum Werkstück erschweren.

Aufgabe der Erfindung ist es, eine Spannvorrichtung der eingangs genannten Art zu schaffen, die einen geringen Bauraum aufweist und einen optimalen Zugang zum Werkstück ermöglicht.

Diese Aufgabe wird durch eine Spannvorrichtung mit den Merkmalen des Anspruchs 1 gelöst. Zweckmäßige Ausgestaltungen und vorteilhafte Weiterbildungen der Erfindung sind Gegenstand der Unteransprüche.

Bei der erfindungsgemäßen Spannvorrichtung wird durch das Koppelgetriebe und die zueinander parallelen Führungsbolzen ein Parallelantrieb mit geringem Bauraum ermöglicht. Die zu spannenden Teile sind somit auch für Schweißköpfe von automatisch betätigten Schweißanlagen ohne weiteres zugänglich. Durch die in entgegen gesetzten Richtungen beweglichen Führungsbolzen der beiden Spannbacken wird auch über einen geringen Verfahrweg des Antriebs ein vergleichsweise großer Spannweg erzielt. Das Koppelgetriebe enthält einen innerhalb des Gehäuses drehbar angeordneten Hebel, der über Verbindungsstifte gelenkig mit den Führungsbolzen verbunden ist.

In einer besonders zweckmäßigen Ausführung der Erfindung sind die beiden Spannbacken an jeweils zwei nebeneinander angeordneten Führungsbolzen angeordnet. Dadurch wird eine besonders stabile und genaue Führung der Spannbacken erreicht.

Der Antrieb ist in vorteilhafter Weise als kombinierter Hand- und Automatikantrieb mit einem am Gehäuse angeordneten Handhebel und einem Stellantrieb, vorzugsweise einem druckmittelbetätigten Zylinder, insbesondere einem Pneumatikzylinder, ausgeführt. Dadurch kann die Spannvorrichtung von Hand in ihre Spannstellung gebracht werden, bevor der druckmittelbetätigte Zylinder zur Erzeugung der eigentlichen Spannkraft beaufschlagt wird. Die Drehung des Hebels zur Verschiebung der Führungsbolzen kann aber auch über den Stellantrieb allein ohne manuellen Eingriff erfolgen.

Die Verbindung zwischen dem Stellantrieb und dem innerhalb des Gehäuses angeordneten Hebel erfolgt zweckmäßigerweise über ein Betätigungselement, das zwischen seitlichen Stegen des Hebels angelenkt ist.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine erfindungsgemäße Spannvorrichtung in einer Seitenansicht;
- **Figur 2**: die in Figur 1 gezeigte Spannvorrichtung in einer Vorderansicht;
- **Figur 3**: die in einer Einlegestellung befindliche Spannvorrichtung in einer Schnittansicht entlang der Linie A-A von Figur 2;
- **Figur 4**: die in einer Spannstellung befindliche Spannvorrichtung in einer Schnittansicht entlang der Linie A-A von Figur 2;
- **Figur 5**: eine Schnittansicht entlang der Linie D-D von Figur 4 und
- **Figur 6**: eine Schnittansicht entlang der Linie E-E von Figur 3.

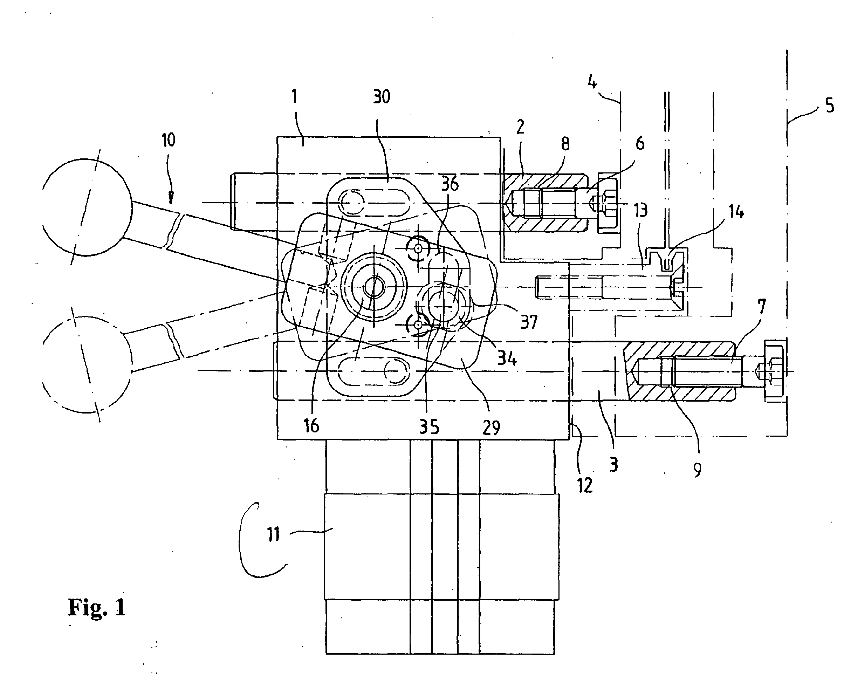

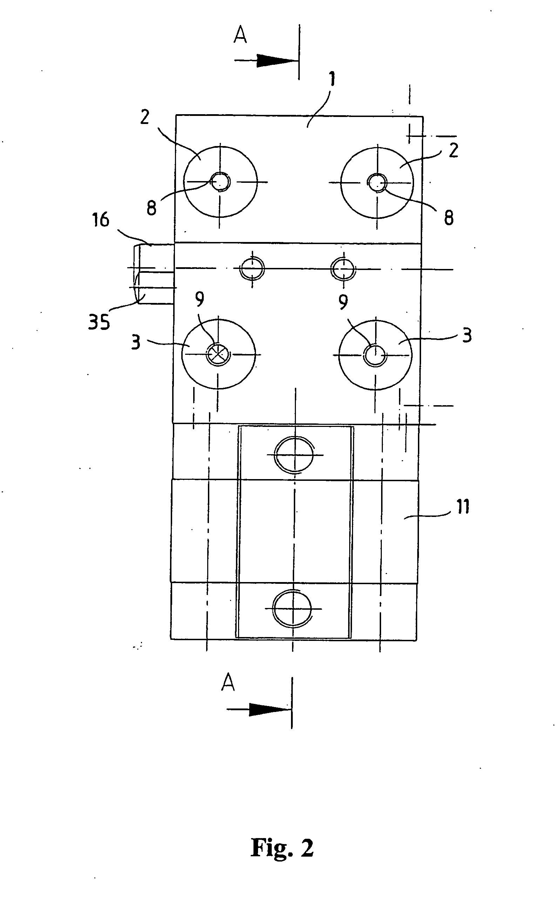

Die in den Figuren 1 und 2 in einer Seiten- und Vorderansicht dargestellte Spannvorrichtung enthält ein Gehäuse 1, in dem zwei in gleicher Höhe nebeneinander angeordnete obere Führungsbolzen 2 und zwei dazu parallele untere Führungsbolzen 3 verschiebbar geführt sind. An den aus dem Gehäuse 1 nach außen vorstehenden Enden der beiden oberen Führungsbolzen 2 ist eine in Figur 1 strichpunktiert dargestellte erste Spannbacke 4 und an den aus dem Gehäuse 1 nach außen vorstehenden Enden der beiden unteren Führungsbolzen 3 ist eine in Figur 1 ebenfalls strichpunktiert dargestellte zweite Spannbacke 5 befestigt. Bei der gezeigten Ausführung sind die beiden zueinander korrespondierenden Spannbacken 4 und 5 über Schrauben 6 bzw. 7 und Gewindebohrungen 8 und 9 fest mit den Führungsbolzen 2 bzw. 3 verbunden.

Innerhalb des Gehäuses 1 ist ein im Folgenden näher erläutertes Koppelgetriebe angeordnet, durch das die beiden Spannbacken 4 und 5 über die Führungsbolzen 2 bzw. 3 manuell durch einen Handhebel 10 und/oder motorisch durch einen an der Unterseite des Gehäuses montierten Stellantrieb 11 gleichzeitig aufeinander zu oder voneinander weg bewegbar sind. An der zu den Spannbacken 4 und 5 weisenden Seitenwand 12 des Gehäuses 1 ist zwischen den nach außen vorstehenden Enden der oberen und unteren Führungsbolzen 2 bzw. 3 ein Zentrierstück 13 mit einer keilförmigen Aufnahme 14 zur Zentrierung der zu spannenden Werkstücke befestigt. Die Aufnahme 14 ist derart angeordnet, dass sie zentrisch zwischen den beiden gegeneinander beweglichen Spannbacken 4 und 5 liegt.

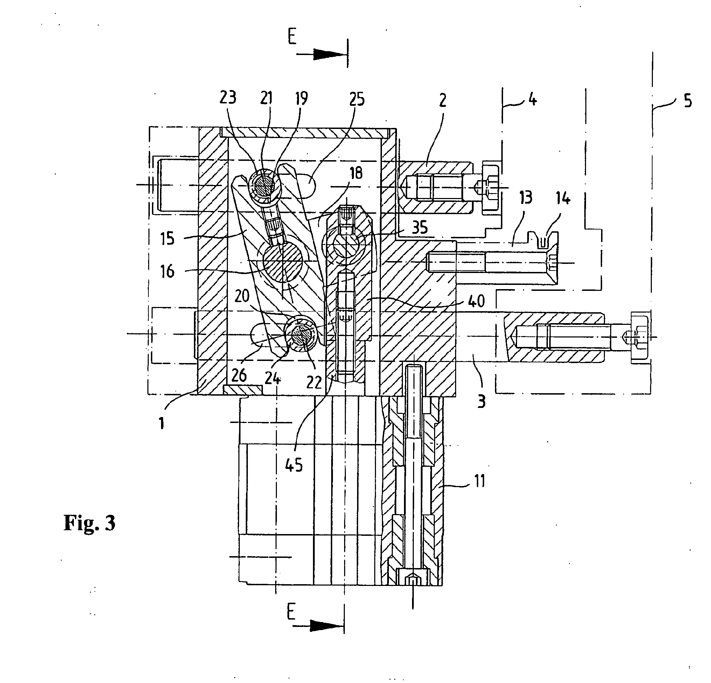

Wie in den Figuren 3 bis 6 gezeigt, umfasst das Koppelgetriebe einen Hebel 15, der auf einer innerhalb des Gehäuses 1 drehbar gelagerten Achse 16 über einen Gewindestift 17 verdrehfest fixiert ist. Die Achse 16 ist zwischen den beiden oberen Wellen 2 und den beiden unteren Wellen 3 quer zu diesen verlaufend im Gehäuse 1 drehbar angeordnet. Der Hebel 15 enthält zwei seitlich vorstehende Stege 18 sowie obere und untere gabelförmige Ausnehmungen 19 bzw. 20, in die den Führungsbolzen 2 und 3 zugeordnete Verbindungsstifte 21 und 22 über Buchsen 23 und 24 eingreifen. In den beiden oberen und unteren gabelförmigen Ausnehmungen 19 bzw. 20 des Hebels 15 ist jeweils eine Buchse 23 und 24 radial verschiebbar geführt.

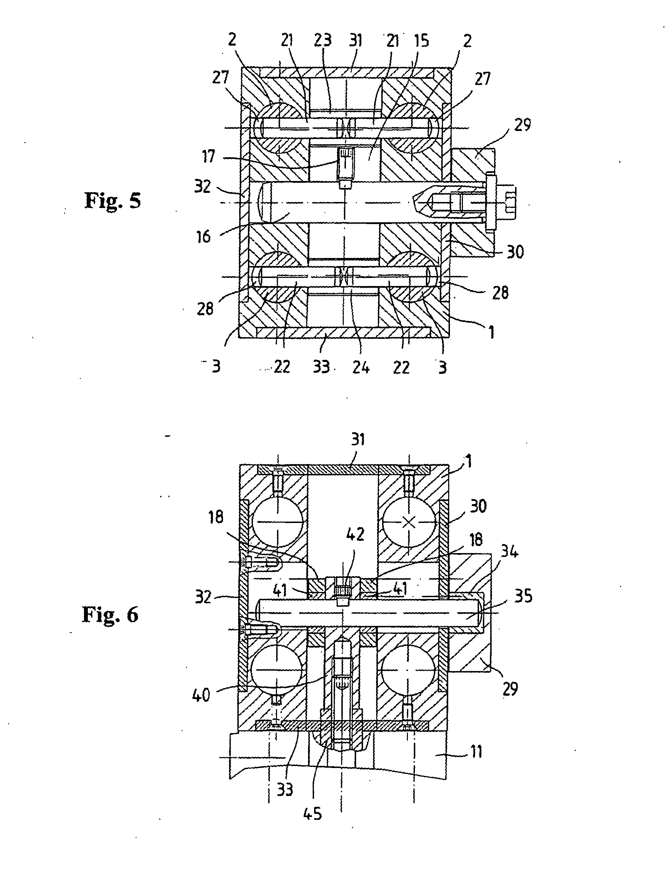

Wie besonders aus Figur 5 hervorgeht, greifen in die oberen und unteren Buchsen 23 und 24 jeweils die inneren Enden zweier Verbindungsstifte 21 und 22 von beiden Seiten ein. Die anderen Enden der Verbindungsstifte 21 und 22 ragen durch in Figur 3 erkennbare Langlöcher 25 und 26 des Gehäuses 1 in seitliche Bohrungen 27 der beiden oberen Führungsbolzen 2 bzw. seitliche Bohrungen 28 der beiden unteren Führungsbolzen 3. Durch Drehung des Hebels 15 werden so die beiden oberen Führungsbolzen 2 und die beiden unteren Führungsbolzen 3 in entgegen gesetzte Richtungen verschoben, wodurch die Spannbacken 4 und 5 zentrisch geschlossen oder geöffnet werden können. Bei der gezeigten Ausführung steht das eine Ende der Achse 16 vom Gehäuse 1 nach außen vor. Auf dem nach außen vorstehenden Ende der Achse 16 ist ein rechteckiger Klotz 29 des in Figur 1 dargestellten Handhebels 10 befestigt. Zur Montage des Koppelgetriebes weist das Gehäuse 1 abnehmbare Seitendeckel 30, 31, 32 und 33 auf. Das Gehäuse 1 kann aber auch zwei oder mehrteilig ausgeführt sein.

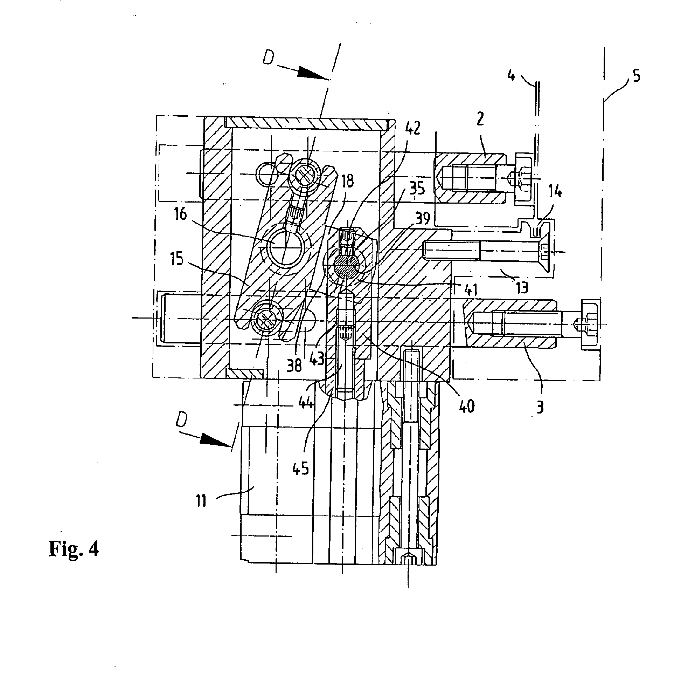

Wie besonders aus Figur 6 ersichtlich, greift in eine Buchse 34 an der Innenseite des mit der Achse 16 drehfest verbundenen Klotzes 29 das aus dem Gehäuse 1 ebenfalls vorstehende Ende eines Stifts 35 ein. Wie in Figur 1 erkennbar, ragt das Ende des Stifts 35 durch ein Langloch 36 im Deckel 30. Die Buchse 34 ist in einem in Figur 1 gestrichelt dargestellten Langloch 37 an der Innenseite des Klotzes 29 verschiebbar geführt. Der Stift 35 verläuft durch in Figur 4 erkennbare Langlöcher 38 in den beiden seitlichen Stegen 18 des Hebels 15 und eine Bohrung 39 in einem zwischen den Stegen 18 angeordneten Betätigungselement 40. Der Stift 35 ist innerhalb der Langlöcher 38 über Zylinderbuchsen 41 drehbar geführt. Das Betätigungselement 40 ist auf dem Stift 35 über einen Gewindebolzen 42 verdrehfest fixiert. Über eine Gewindebohrung 43 an seiner Unterseite und einen Gewindestift 44 ist das Betätigungselement 40 mit einer axial beweglichen Antriebsstange 45 des Stellantriebs 11 verbunden. Die durch eine entsprechende Öffnung in das Gehäuse 1 ragende Antriebsstange 45 des Stellantriebs 11 ist über das Betätigungselement 40 so mit dem Hebel 15 verbunden, dass durch Linearbewegung der Antriebsstange 45 der Hebel 15 zur gegenseitigen Verschiebung der Führungsbolzen 2 und 3 gedreht werden kann.

Der an der Unterseite des Gehäuses 1 montierte Stellantrieb 11 ist bei dem gezeigten Ausführungsbeispiel als Pneumatikzylinder mit einer einseitigen Kolbenstange als Antriebsstange 4 ausgeführt. Der Pneumatikzylinder kann aber auch mit beidseitiger Kolbenstange ausgeführt sein, wobei am unteren Ende der Kolbenstange ein Handhebel zur zusätzlichen manuellen Betätigung der Kolbenstange angelenkt sein kann.

Die vorstehend beschriebene Spannvorrichtung funktioniert wie folgt:

Bei der in Figur 3 gezeigten Einlegestellung der Spannvorrichtung befinden sich die beiden Spannbacken 4 und 5 in einer auseinander gefahrenen Position. In dieser Stellung kann ein Werkstück eingelegt werden, wobei die untere Kante des Werkstücks in die entsprechende Aufnahme 14 des Zentrierstücks 13 eingesetzt wird. Über dieses Zentrierstück 13 wird eine ordnungsgemäße Positionierung des Werkstücks erreicht.

Wenn das Werkstück eingelegt ist, kann der Hebel 15 mit Hilfe des Handhebels 10 manuell aus der in Figur 3 gezeigten Stellung in die gemäß Figur 4 dargestellte Stellung gedreht werden, wobei die beiden Spannbacken 4 und 5 über die Führungsbolzen 2 bzw. 3 gleichzeitig aufeinander zu verschoben werden. Dann kann der als Pneumatikzylinder ausgeführte Stellantrieb 11 derart angesteuert werden, dass die Antriebstange 45 nach unten gezogen wird, wodurch die eigentliche Spannkraft erzeugt wird. Aus Sicherheitsgründen ist vorgesehen, dass der Stellantrieb 11 erst dann betätigt werden kann, wenn ein hier nicht dargestellter Sensor 34 die ordnungsgemäße Lage des Werkstücks signalisiert. Die Betätigung der Spannbacken 4 und 5 kann aber auch ausschließlich über den Stellantrieb 11 erfolgen.

Zum Öffnen der Spannvorrichtung wird der Pneumatikzylinder entsprechend umgesteuert, so dass die Antriebsstange 45 nach oben bewegt und der Hebel 15 wieder in die Stellung von Figur 3 gedreht kann. Dies kann entweder von Hand über den Handhebel 10 oder über den Stellantrieb 11 erfolgen. Die Spannbacken 4 und 5 fahren dann wieder auseinander und das Werkstück kann entnommen werden.

## Patentansprüche

1. Spannvorrichtung mit einem Gehäuse (1) und mindestens zwei Spannbacken (4, 5), die relativ zum Gehäuse (1) zwischen einer Einlegestellung und einer Spannstellung verschiebbar sind, wobei die Spannbacken (4, 5) an zueinander parallelen Führungsbolzen (2, 3) angeordnet sind, die innerhalb des Gehäuses (1) verschiebbar geführt und durch einen gemeinsamen Antrieb (10, 11) über ein innerhalb des Gehäuses (1) angeordnetes Koppelgetriebe (15, 21, 22) verschiebbar sind, **dadurch gekennzeichnet, dass** die Führungsbolzen (2, 3) entgegengesetzt zueinander verschiebbar sind, wobei das Koppelgetriebe (15, 21, 22) einen innerhalb des Gehäuses (1) drehbar angeordneten Hebel (15) enthält, der über Verbindungsstifte (21, 22) gelenkig mit den Führungsbolzen (2, 3) verbunden ist.

2. Spannvorrichtung nach Anspruch 1, **dadurch gekennzeichnet, dass** die beiden Spannbacken (4, 5) an jeweils zwei nebeneinander angeordneten Führungsbolzen (2, 3) angeordnet sind.

3. Spannvorrichtung nach Anspruch 1 oder 2, **dadurch gekennzeichnet, dass** in dem Gehäuse (1) zwei obere Führungsbolzen (2) für die eine Spannbacke (4) und zwei untere Führungsbolzen (3) für die andere Spannbacke (5) verschiebbar geführt sind.

4. Spannvorrichtung nach einem der Ansprüche 1 bis 3, **dadurch gekennzeichnet, dass** der Antrieb (10, 11) als kombinierter Hand- und Automatikantrieb mit einem am Gehäuse (1) angeordneten Handhebel (10) und einem am Gehäuse (1) befestigten Stellantrieb (11) ausgeführt ist.

5. Spannvorrichtung nach Anspruch 4, **dadurch gekennzeichnet, dass** der Stellantrieb (11) ein druckmittelbetätigter Zylinder, vorzugsweise ein Pneumatikzylinder ist.

6. Spannvorrichtung nach Anspruch 4 oder 5, **dadurch gekennzeichnet, dass** der Hebel (15) auf einer Achse (16) angeordnet ist, die zwischen den Führungsbolzen (2, 3) quer zu diesen verlaufend im Gehäuse (1) drehbar gelagert ist.

7. Spannvorrichtung nach Anspruch 6, **dadurch gekennzeichnet, dass** der Handhebel (10) über einen Klotz (29) verdrehfest auf einem aus dem Gehäuse (1) nach außen vorstehenden Ende der Achse (16) angeordnet ist.

8. Spannvorrichtung nach Anspruch 7, **dadurch gekennzeichnet, dass** der Handhebel (10) über einen Stift (35) mit dem Hebel (15) verbunden ist.

9. Spannvorrichtung nach Anspruch 8, **dadurch gekennzeichnet, dass** der Stift (35) durch Langlöcher (38) in seitlichen Stegen (18) des Hebels (15) verläuft und mit einem aus dem Gehäuse (1) nach außen vorstehenden Ende in eine Buchse (34) an der Innenseite des Klotzes (29) eingreift.

10. Spannvorrichtung nach Anspruch 9, **dadurch gekennzeichnet, dass** zwischen den seitlichen Stegen (18) des Hebels (15) ein Betätigungselement (40) zur Verbindung des Hebels (15) mit dem Stellantrieb (11) angelenkt ist.

11. Spannvorrichtung nach einem der Ansprüche 2 bis 10, **dadurch gekennzeichnet, dass** zwischen den oberen Führungsbolzen (2) und den unteren Führungsbolzen (3) ein Zentrierstück (13) am Gehäuse (1) befestigt ist.

## Claims

1. Clamping device with a housing (1) and at least two clamping jaws (4, 5) which are displaceable relative to the housing (1) between an insertion position and a clamping position, wherein the clamping jaws (4, 5) are arranged on guide pins (2, 3) which are parallel to one another and guided displaceably inside the housing (1) and displaceable by a common drive (10, 11) by means of a coupler mechanism (15, 21, 22) arranged inside the housing (1), **characterised in that** the guide pins (2, 3) are displaceable in opposition to one another, the coupler mechanism (15, 21, 22) comprising a lever (15) which is arranged pivotably inside the housing (1) and is connected flexibly to the guide pins (2, 3) by means of connecting pins (21, 22).

2. Clamping device according to claim 1, **characterised in that** the two clamping jaws (4, 5) are arranged on two guide pins (2, 3) arranged next to one another in each case.

3. Clamping device according to claim 1 or 2, **characterised in that** in the housing (1) two upper guide pins (2) are guided displaceably for one clamping jaw (4) and two lower guide pins (3) are guided displaceably for the other clamping jaw (5).

4. Clamping device according to claim 1 to 3, **characterised in that** the drive (10, 11) is embodied as a combined manual and automatic drive with a manual lever (10) arranged on the housing (1) and a positioning drive (11) fastened on the housing (1).

5. Clamping device according to claim 4, **characterised in that** the positioning drive (11) is a cylinder actuated by pressure medium, preferably a pneumatic cylinder.

6. Clamping device according to claim 4 or 5, **characterised in that** the lever (15) is arranged on a shaft (16) which is mounted pivotably in the housing (1) between the guide pins (2, 3) running transversely in relation to these.

7. Clamping device according to claim 6, **characterised in that** the manual lever (10) is arranged fixed in rotation by means of a block (29) on one end of the shaft (16) projecting externally out of the housing (1).

8. Clamping device according to claim 7, **characterised in that** the manual lever (10) is connected to the lever (15) by means of a pin (35).

9. Clamping device according to claim 8, **characterised in that** the pin (35) runs through slots (38) in side webs (18) of the lever (15) and engages by one end projecting externally out of the housing (1) into a bush (34) on the inside of the block (29).

10. Clamping device according to claim 9, **characterised in that** an actuating element (40) for connecting the lever (15) to the positioning drive (11) is articulated between the side webs (18) of the lever (15).

11. Clamping device according to one of claims 2 to 10, **characterised in that** a centring piece (13) is fastened to the housing (1) between the upper guide pins (2) and the lower guide pins (3).

## Revendications

1. Dispositif de serrage avec un boîtier (1) et au moins deux joues de serrage (4, 5) qui par rapport au boîtier (1) coulissent entre le position d'insertion et la position de serrage, sachant que les joues de serrage (4, 5) sont disposées sur des boulons de guidage (2, 3) parallèles, coulissant à l'intérieur du boîtier (1) et actionnées par une transmission commune (10, 11) par le biais d'un mécanisme articulé (15, 21, 22) placé à l'intérieur du boîtier (1), **caractérisé en ce que** les boulons de guidage (2, 3) coulissent à contresens, sachant que le mécanisme articulé (15, 21, 22) comporte un levier rotatif (15) placé dans le boîtier (1) et relié aux boulons de guidage (2, 3) par des tiges de liaisons coudées (21, 22).

2. Dispositif de serrage selon la revendication 1, **caractérisé en ce que** les deux joues de serrage (4, 5) sont disposées respectivement sur deux boulons de guidage (2, 3) placés l'un à côté de l'autre.

3. Dispositif de serrage selon la revendication 1 ou 2, **caractérisé en ce que** dans le boîtier (1) coulissent deux boulons de guidage supérieurs (2) pour l'une des joues (4) et deux boulons de guidage inférieurs (3) pour l'autre joue (5).

4. Dispositif de serrage selon l'une des revendications 1 à 3, **caractérisé en ce que** la transmission (10, 11) consiste en une transmission combinée manuel et automatique avec une manivelle (10) placée sur le boîtier (1) et une transmission de réglage (11) fixée sur le boîtier (1).

5. Dispositif de serrage selon la revendication 4, **caractérisé en ce que** la transmission de réglage (11) consiste en un cylindre actionné par un système de pression, de préférence un cylindre pneumatique.

6. Dispositif de serrage selon la revendication 4 ou 5, **caractérisé en ce que** le levier (15) est disposé sur un axe rotatif (16) logé dans le boîtier (1) entre les boulons de guidage (2, 3) et en travers de ces derniers.

7. Dispositif de serrage selon la revendication 6, **caractérisé en ce que** la manivelle (10) est fixée par le biais d'un sabot (29) sur une extrémité de l'axe (16) ressortant du boîtier (1).

8. Dispositif de serrage selon la revendication 7, **caractérisé en ce que** la manivelle (10) est reliée au levier (15) par le biais d'une tige (35).

9. Dispositif de serrage selon la revendication 8, **caractérisé en ce que** la tige (35) s'étire à travers des trous oblongs (38) dans des listeaux latéraux (18) du levier (15) et prend dans une bague (34) du côté interne du sabot (29) avec une extrémité ressortant du boîtier (1).

10. Dispositif de serrage selon la revendication 9, **caractérisé en ce qu'**entre les listeaux latéraux (18) du levier (15) est articulé un élément d'actionnement (40) servant à relier le levier (15) à al transmission de réglage (11).

11. Dispositif de serrage selon l'une des revendications 2 à 10, **caractérisé en ce qu'**une pièce de centrage (13) est fixée sur le boîtier (1) entre les boulons de guidage supérieurs (2) et les boulons de guidage inférieurs (3)
